# EUROPEAN PATENT APPLICATION

(11) **EP 3 035 072 A1**
(43) Date of publication of application: **22.06.2016**
(21) Application number: 15156135.4
(22) Date of filing: 23.02.2015
(51) Int. Cl.: G01S 3/54, G06K 7/10, G01S 13/76

(54) **Pseudo-doppler direction finding antenna adaption for RFID applications**

(30) Priority: 19.12.2014 EP 14199340
(71) Applicant: Siemens Aktiengesellschaft, 80333 München (DE)
(72) Inventor: Richter, Siegfried, 91207 Lauf (DE); Ramirez, Alejandro, 80797 München (DE); Yuan, Yong, 102208 Beijing (CN)

(57) **Abstract**

We propose a method and a system which allows to define areas of coverage as well as find out the direction in which an RFID transponder is located. The solution features an artificially generated Doppler effect (aka pseudo-Doppler). The Doppler Effect is a change in the phase and frequency of a signal due to the relative change in the distance between the sender and receiver. In a first step, a phase difference determination between the phase of transmitted signal and the phase of received signal for each of the coupled antennas is provided. In a second step, a calculation of the receiving angle by comparison of the multiple phase differences determined in the first step is conducted.

## Description

The invention relates to a method and to a system for determining receiving angle of an RFID tag in a RFID application.

RFID transponders are small (-25 cm²) and thin (∼ 1mm) electronic devices which contain information that can be remotely accessed. Passive RFID transponders don't contain an internal energy source, instead obtaining power from a specially crafted radio signal sent by an RFID reader.

RFID transponders operate in three frequencies: Low frequency (LF), high frequency (HF) and ultra high frequency (UHF). As UHF transponders have the longest communications range (max. ∼ 10m), this invention disclosure will use these as an example. The ideas proposed on this invention will be equally valid for LF, HF UHF, and SHF transponders.

When a RFID transponder is sending information, reflections caused by the environment can lead to constructive interference which may lead to an unpredictable area of detection. The relatively large range of a UHF RFID system (i.e. 10m distance) makes limiting the area of coverage a real challenge.

The problem being solved here is finding out the direction of the movement of an RFID transponder as well as defining areas zones to be blocked when reading such transponders, without using huge and complex antenna systems.

The typical tools used to limit an area of coverage are directional antennas, and adjustments of the sending power. However, due to reflections and the presence of moving objects in a typical scenario, this is a difficult task, as the signal can come from any direction and still be detected.

To reduce such issues, surfaces around the RFID reader may be covered with absorbing materials. Such is very expensive. In addition, such material cannot be applied to all applications. Nevertheless, that approach may help reduce the effect of reflections and moving objects in some cases.

The publication DE 10 2011 111121 A1 (Metratec) employs a combined optical and RF-based system for tracking the position of transponders.

The product "Speedway X" of the manufacturer Impinj shows an RFID reader which makes use of a phased antenna array for detecting receiving angle.

We propose a system which will allow us to define areas of coverage as well as find out the direction in which an RFID transponder is located.

The first feature is using an artificially generated Doppler effect (aka pseudo-Doppler). The Doppler Effect is a change in the phase and frequency of a signal due to the relative change in the distance between the sender and receiver.

To achieve a Doppler effect, a possibility is to have a single antenna rotating. The magnitude of the effect will be related to the speed of the wave and directly proportional to the rotational speed of the antenna. As the speed of light is such a high number, the rotational speed to have a noticeable effect leads us to several kilohertz, which is difficult to implement mechanically.

A solution for that, which can already be found on the market, is to use several antennas positioned in a circle, which will then be controlled by an antenna switch.

There are several reasons why a commercially available pseudo-Doppler direction finding (DF) system will not work with RFID. The first reason is that these systems require a carrier wave (CW) to work, which does not change over time. Having the wave carrying information via modulation, this will invoke frequency shifts that will lead to multiple several zero-crossings around the one seen with a simple CW.

Another reason why a commercial system won't work is the way RFID works. As the signal sent by the RFID reader is reflected by the RFID transponder, a commercial direction finding equipment will always report the direction of the RFID reader, as the signal is orders of magnitude "louder" than the reflection of the RFID transponder.

A third problem is in the integration. If a commercial pseudo-Doppler DF device were to be integrated with an RFID reader, as the transmission and the reception of an RFID signal is done simultaneously, the rotation will double the received Doppler Effect with the one being sent. Even further, the frequency oscillations caused by the pseudo-Doppler generated by the rotation of the transmitted signal might cause serious problems with the communication.

The proposed solution has several parts. One part is adding an additional antenna to the mix, which will be used only for transmitting. This will solve the problems presented by frequency shifting generated by a rotating transmitter. In addition, this design decision will reduce, but not eliminate, the problem with the self-jamming.

Subject of an embodiment of solution is providing a direct signal from the output of the RFID reader to be used as a reference, so that the problem of self-jamming can be further reduced through the use of algorithms. The important algorithm is to subtract the transmitted signal to isolate the backscattered phase information of the tag. Due to the Doppler Effect from this phase information the arriving angle of the signal can be derived. The Doppler phase difference can be e.g. calculated by measuring the phase difference between the switched antennas, always compared to the transmitted signal.

An additional part to our solution is the use of a static antenna to receive the signals on the air (a combination of the signal sent by the RFID reader, the signal sent by the RFID transponder and the many reflections generated by the environment).

The proposed solution achieves many advantages. To explain some of them, let us take the scenario of an RFID gate. An RFID gate is a construction which purpose is reading information of the RFID transponders as they cross the gate in any direction. Such gates are often equipped to a direction sensor, which reports the direction of the movement through the gate.

As the proposed system will know the relative precise angle in which the RFID transponder is located, the system can track this movement without the addition of such sensor. Another problem with the gate is determining the area of coverage. Objects carrying an RFID transponder may be present in the vicinity of the RFID gate. If the distance to the RFID antennas sets them on the edge of the coverage field, this transponder will be in or out of range, depending on the exact reflections in the environment. When a forklift moves through the gate, the metallic parts of the forklift will also create reflections which will make visible transponders that are on the outer edge of this field, which will be interpreted as being carried by the forklift.

Through the use for the invented system, a determination can be made about the direction where the signal is originating, and thus working as a plausibility check as to finding out if the transponder is being carried by the forklift or not.

If the system is used in cooperation with other RFID readers in the same factory hall, the possibility exists for workers to carry an RFID transponder with them (for example, as part of their corporate identification), and be constantly located while they move through the hall. This information can be very useful for optimizing the processes in a factory and evacuation purposes.

Another use for the proposed system is to filter items according to their location. For example, a typical factory scenario is to read items on a conveyor belt, for which an RFID reader will be located in close proximity to this belt. In a real implementation, due to reflections, items that are farer away (for example on a different conveyor belt) will be detected from time to time. As our system is able to detect the angle from where this signal came from, it will allow a plausibility check as to where the signal is coming from. In addition, the direction of the movement and the movement speed of the item can provide additional information to do this kind of checks, to avoid reading items not located on said conveyor belt.

Another scenario is a so-called Smart Shelf. This kind of shelf will provide information of the relative position on the shelf of each object. This can be used to hold a real time inventory which, coupled to other systems, can automatically order parts. A solution existing on the market will require one RFID antenna for each position that is to be detected, which may require dozens of antennas for each shelf.

Another application scenario for our system is known as Just-In-Sequence (JIS). JIS deliveries will specify beforehand the exact position for each item. For example, car parts such as car seats will be delivered in a container carrying several items, which are set up in the exact same order as the items have to be installed on a car. JIS deliveries today are often checked manually by one or two operators to confirm that the item order in the delivery is exact. Through the use of our system, we can also build a gate through which the relative position of the items can be confirmed before shipping.

Another application for the system is for locating items in a warehouse. Many handheld RFID readers can be found on the market. Most of these handheld devices will have a directional antenna pointing forward, to make a directional focus of the RFID communication. Through our compact Doppler antenna solution, a handheld device can be built with a direction finding capability, which will allow the user to easily pinpoint the location of a specific RFID transponder. Through a user interface the user can know not only if the transponder is in range but also in which direction it can be found. It is also possible to have other RFID readers in the vicinity help with the process using their own direction finding equipment.

Combining two receiving antennas would allow the proposed system to find the 2D position of the RFID tag. These antennas can work simultaneously or in sequence (one after another). However, when using the antennas sequentially, it is important that not much time has passed, as the RFID transponder might have moved a substantial distance. An additional possibility would be to combine two antenna arrays into a housing, in which some antenna elements might even be reused, in order to reduce costs and size.

This solution has many advantages over the state-of-the-art with phased array:
- Smaller antenna, a portable solution is also possible: While flat phased arrays are able to locate the angle-of-arrival of a signal, they require antennas that are several times larger than our system
- Achieve a higher measurement resolution: Only with the higher resolution the above mentioned applications can be covered with the expected reliability.
- Faster recovery of Tags: To recover all Tags in a reachable area, a phased array based Reader has to communicate sequential step by step with all the available antenna patterns.
- A cheaper and more flexible design, because direction finding derived from phase shift decoding can be realized with a design of switched antennas to one input of a phase shift processing device. With this design the antenna can be integrated in the reader or be a external device, connected with a antenna cable with the RFID Reader.
- The coverage of the Doppler Antenna is not limited: 360 degree compared to a typical Phased array with 120 degree.

A further advantage of the system is the possibility of limiting the angular region in which an RFID transponder is to be detected. For example, the system may be configured to detect only the signals originating 10° away from the middle of the array, ignoring any signals coming from outside this angular region. An additional enhancement can be to dynamically adapt this angle, to be able to track an RFID transponder

Connecting several switched antennas to one phase shift processing device, which compare the phase shift between the received RFID sideband and the transmitted CW of the RFID Reader. To isolate the phase of the back scattered Tag signal from the RFID Reader transmitter signal, the imaginary part of the transmitted signal has to be subtracted from the received sum signal.

Provoked by the pseudo Doppler phase shift of the switched antennas the direction of a received RFID tag signal can be calculated with a mathematical algorithm down to a minimum of 2 antennas determined with a high accuracy.

To detect the angle of a received tag signal in a range up to 360degree with the same accuracy, the Antennas must be positioned in a circle, a square or half circle or triangle. The switch is integrated in the antenna. The antenna is connected from the root of the switch via one line to the phase shift processing device.

Examples of an inventive method and an inventive system are shown in the figures.

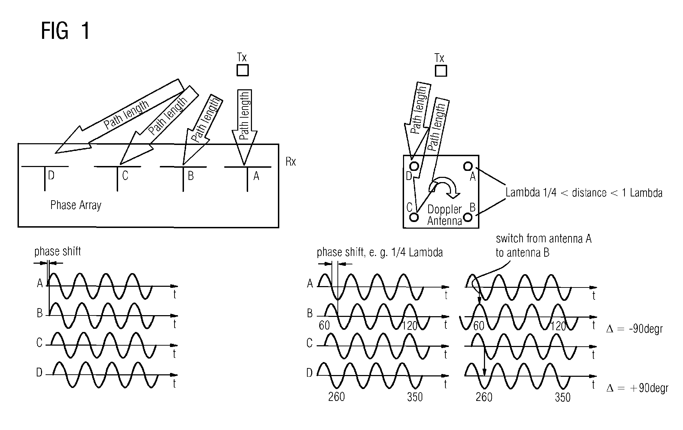

FIG. 1 shows the comparison between a system of the state of the art employing a "phase antenna array" (left side) and a system according to the invention featuring switched antennas for achieving a "pseudo Doppler effect" (right side). The phase shift which can be detected in the "pseudo Doppler arrangement" (right side) is much higher than the phase shift of a planar "phased array antenna" case, thus allowing a much higher accuracy caused by a higher resolution with the Doppler arrangement. The Doppler arrangement is cheaper without a complex phase shifter design. Only low requirements regarding precise production methods and calibrating are needed. An additional advantage is the high bandwidth of the antenna, without loosing accuracy of the direction information. The phase shift depends on the distance between the antennas which might be up to 1 Lambda.

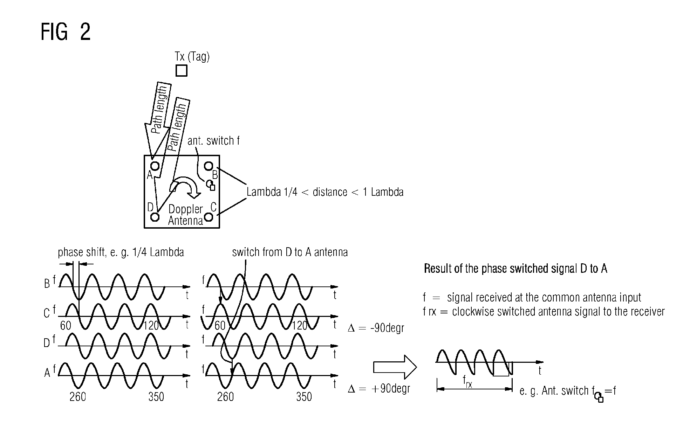

FIG. 2 shows the Influence of the rotating frequency to the Doppler effect.

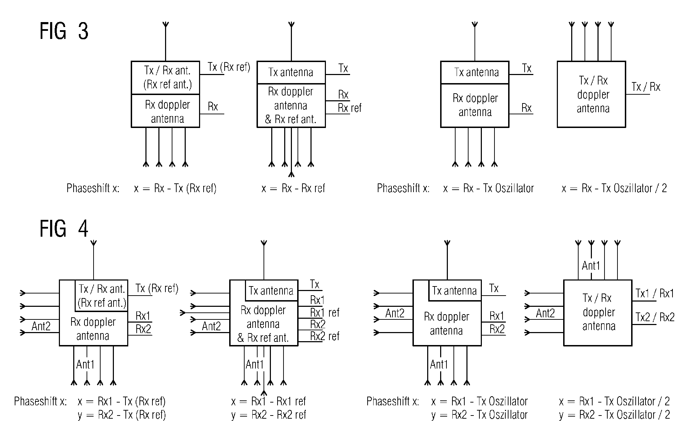

FIG. 3 shows examples for a basic architecture, featuring 2D Doppler antennas for different measurement methods.

FIG. 4 shows further examples for a basic architecture, featuring 3D Doppler antennas, combined to measure x and y angles. The example shown on the left side employs reference antennas. The example right utilizes a connection to the internal oscillator which for this purpose must be calibrated. As an alternative to the shown example with two antenna interfaces (Tx1/Rx1, Tx2/Rx2), antenna 1 and 2 could also be used sequential with one combined Tx/Rx connector.

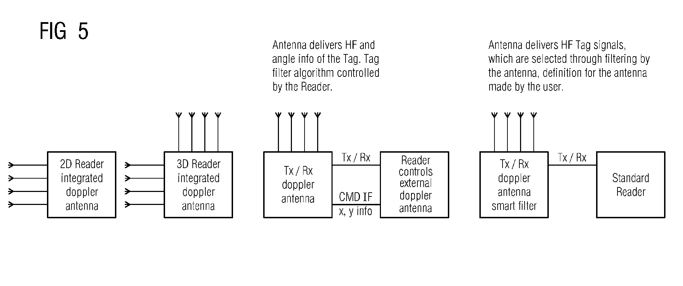

FIG. 5 shows further examples for a basic architecture, featuring RFID reader with integrated (left) and external (mid) Doppler antennas (the latter with Command Interface CMD_IF), or a standard RFID reader coupled to a smart antenna (right).

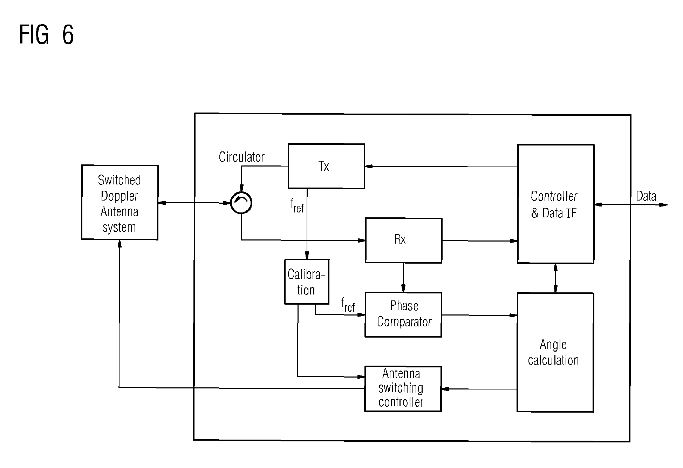

FIG. 6 shows a RFID reader architecture with additional pseudo Doppler Rx system based on phase comparison. Reference frequency f_{ref} is derived from the transmitter Tx.

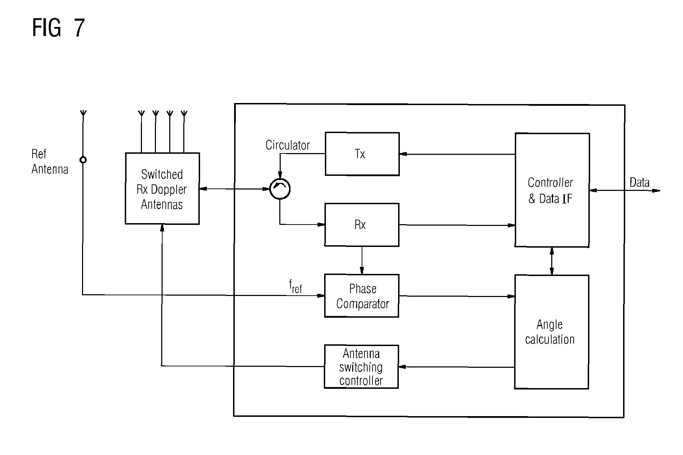

FIG. 7 shows an alternative RFID reader architecture with additional pseudo Doppler Rx system based on phase comparison, reference frequency f_{ref} is derived from a static reference antenna.

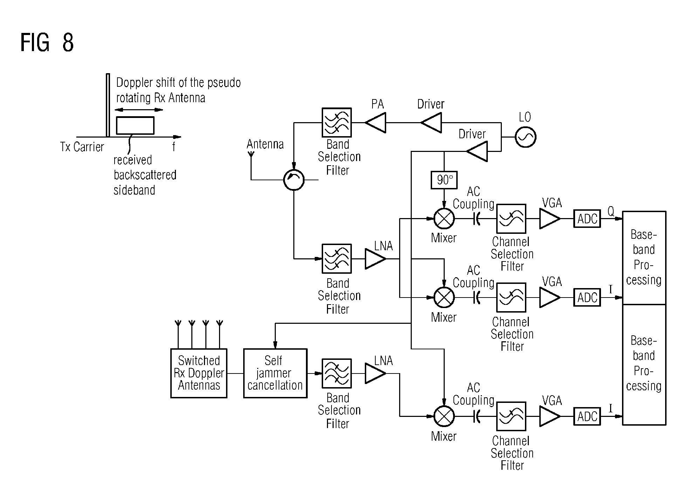

FIG. 8 shows a conventional RFID reader architecture with additional pseudo Doppler Rx system. This solves the problem of decoupling of Tx - RX against saturated RF stage (mixer). This concept leads to good self jammer cancellation.

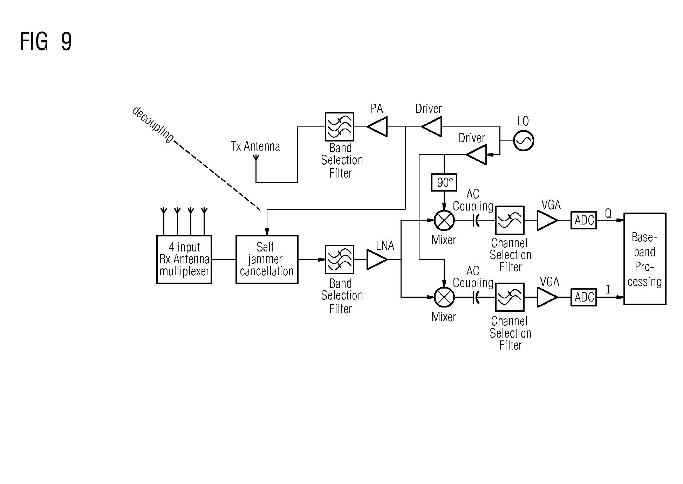

FIG. 9 shows a Doppler concept applied on a modified RF Reader architecture with static Tx antenna and 4 times multiplexed Pseudo Doppler Rx antenna, instead of circulator decoupling of antennas and providing self jammer cancellation.

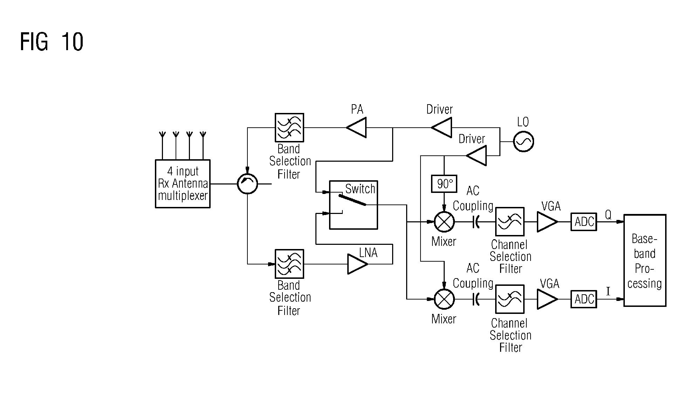

FIG. 10 features a Doppler concept applied on a modified RF Reader architecture with 1 combined Tx/Rx 4 times Pseudo Doppler Rx / Tx Antenna.

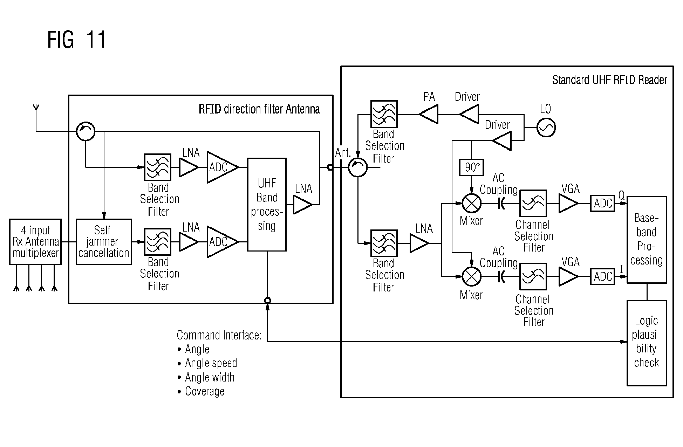

FIG. 11 shows a Doppler concept applied on a RF Reader. A multiplexed Rx antenna is combined with a Rx/Tx reference antenna. The smart antenna can be connected to a standard Reader architecture with an additional command Interface

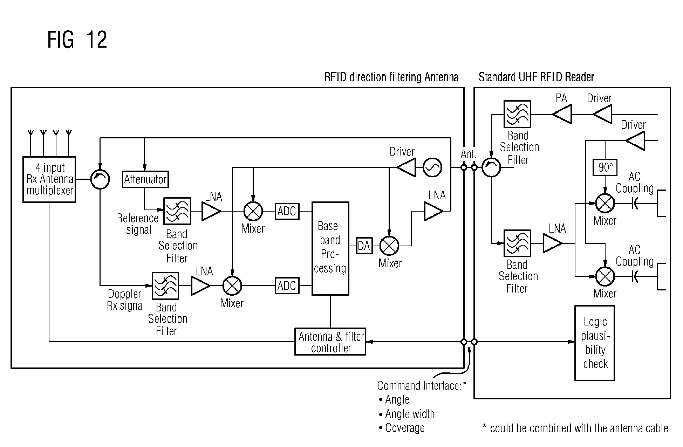

FIG.12 shows an alternative Doppler concept applied on a RF Reader antenna, which can be connected to standard Reader architectures with an additional command Interface, without a reference antenna. The Logic plausibility check e.g. to verify the angle speed of two conveyors will be made by the Reader. The command interface between the smart antenna and the reader can be combined with the antenna interface.

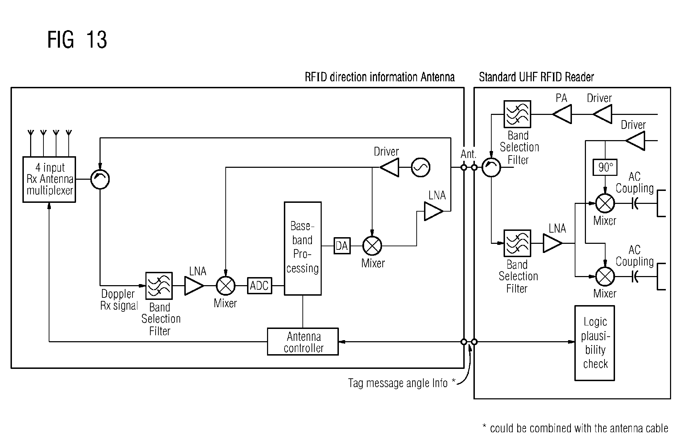

FIG. 13 shows a further alternative Doppler concept applied on a RF Reader antenna, which can be connected to standard Reader architectures with an additional command Interface. Baseband Processing comprises calculating angle and eliminating Doppler signal caused by the pseudo antenna speed. No reference antenna signal must be employed. The reader contains the direction analyzer.

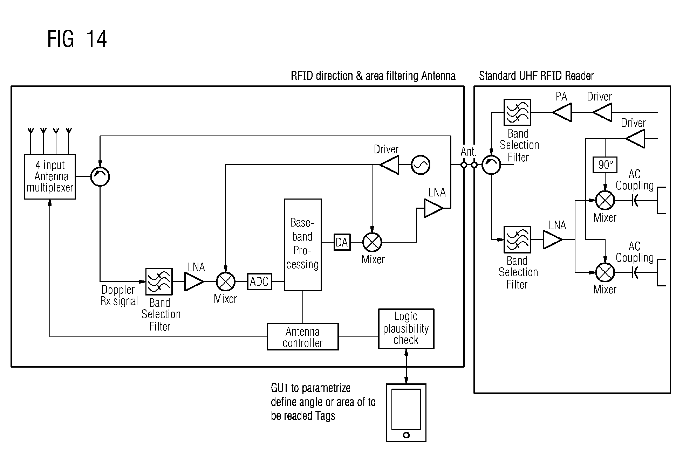

FIG. 14 shows a further alternative Doppler concept applied on a RF Reader antenna, which can be connected to a standard Reader. The reader contains the filtering mechanism to select Tags in a defined direction or defined area. Baseband Processing comprises calculating angle, passing signal of defined angle, eliminating Doppler signal derived from the pseudo Doppler antenna. The smart antenna can be parameterized with a integrated GUI or a external connected portable device (e.g. PDA, Tablet computer or Smart Phone).

## Claims

1. A method for determining receiving angle of an RFID tag in a RFID application,
wherein a RFID reader is connected with multiple RFID antennas,
wherein, during one receiving cycle or between multiple receiving cycles, a receiving section of the RFID reader is alternately coupled to the antennas,
**characterized in**
executing, in a first step, phase difference determination between the phase of transmitted signal and the phase of received signal for each of the coupled antennas, and
conducting, in a second step, calculation of the receiving angle by comparison of the multiple phase differences determined in the first step.

2. The method according to claim 1,
**characterized in**
using an additional antenna for the RFID reader for transmitting the radio frequency signal.

3. The method according to one of the preceding claims,
**characterized in**
using of a static antenna to receive the signals on the air.

4. The method according to one of the preceding claims,
**characterized in**
providing a direct signal from the output of the RFID reader to be used as a reference for the phase difference determination.

5. The method according to claim 4,
**characterized in**
subtracting, in the second step, the imaginary part of the transmitted signal to isolate the backscattered phase information of the tag, and
deriving from this phase information the arriving angle of the signal. (As my previous question, I do not understand the reason to remove imaginary part of TX signal.)

6. A system for determining receiving angle of an RFID tag in a RFID application
wherein the system is set up to alternately couple, during one receiving cycle or between multiple receiving cycles, a receiving section of the RFID reader to the multiple antennas,
**characterized in**
**that** the system is arranged for executing, in a first step, phase difference determination between the phase of transmitted signal and the phase of received signal for each of the coupled antennas, and
**that** the system is arranged for conducting, in a second step, calculation of the receiving angle by comparison of the multiple phase differences determined in the first step.

7. The system according to claim 6,
**characterized in**
using an additional antenna for the RFID reader for transmitting the radio frequency signal.

8. The system according to claim 6 or 7,
**characterized in**
a static antenna to receive the signals on the air.

9. The system according to one of claims 6 to 8,
**characterized in**
means for providing a direct signal from the output of the RFID reader to be used as a reference for the phase difference determination.

10. The system according to claim 9,
**characterized in**
means for subtracting, in the second step, the imaginary part of the transmitted signal to isolate the backscattered phase information of the tag, and means for deriving from this phase information the arriving angle of the signal.
